(19) Europäisches Patentamt
European Patent Office
Office européen des brevets

(11) **EP 2 924 272 A1**

(12) **EUROPEAN PATENT APPLICATION**
published in accordance with Art. 153(4) EPC

(43) Date of publication:
**30.09.2015 Bulletin 2015/40**

(21) Application number: **12888626.4**

(22) Date of filing: **26.11.2012**

(51) Int Cl.:
*F02M 25/07* (2006.01)   *F02D 21/08* (2006.01)

(86) International application number:
**PCT/JP2012/080491**

(87) International publication number:
**WO 2014/080523 (30.05.2014 Gazette 2014/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TOYOTA JIDOSHA KABUSHIKI KAISHA**
**Toyota-shi, Aichi-ken, 471-8571 (JP)**

(72) Inventor: **IBUKI, Taku**
**Toyota-shi, Aichi-ken, 471-8571 (JP)**

(74) Representative: **Smith, Samuel Leonard**
**J A Kemp**
**14 South Square**
**Gray's Inn**
**London WC1R 5JJ (GB)**

(54) **CONTROL DEVICE OF INTERNAL COMBUSTION ENGINE**

(57)    An object of this invention is to enhance the accuracy of control of an EGR rate or an EGR amount by actuation of an EGR valve in an internal combustion engine in which an exhaust passage and an intake passage are connected through the EGR valve. To achieve this object, a control device according to the invention calculates a first-order lag time constant that is an indicator of a response delay in the movement of EGR gas with respect to an action of the EGR valve, based on a pressure difference between upstream and downstream of the EGR valve. The control device according to the invention calculates a control target value on the basis of a first-order lag time constant that is calculated based on the pressure difference between upstream and downstream of the EGR valve and on the basis of a target value of an EGR rate or an EGR amount, and actuates the EGR valve in accordance with the control target value.

FIG. 3

```
              START
                |
   MEASURE ENGINE SPEED           — S1
                |
   CALCULATE FUEL INJECTION AMOUNT — S2
                |
   CALCULATE CHARGED PRESSURE      — S3
                |
   CALCULATE INTAKE MANIFOLD GAS TEMPERATURE — S4
                |
   [                            ]  — S5
                |
   [                            ]  — S6
                |
   [                            ]  — S7
                |
   CALCULATE EXHAUST PRESSURE      — S8
                |
   [                            ]  — S9
                |
   [                            ]  — S10
                |
   [                            ]  — S11
                |
   [                            ]  — S12
                |
              END
```

EP 2 924 272 A1

**Description**

**Technical Field**

The present invention relates to a control device of an internal combustion engine that connects an exhaust passage and an intake passage through an EGR valve.

**Background Art**

Technology relating to EGR control for a diesel engine is disclosed in Japanese Patent Laid-Open No. 2005-54657. According to the technology disclosed in the aforementioned Japanese Patent Literature, a target EGR rate is calculated based on engine speed, a target injection quantity and the water temperature, and the degree of opening of an EGR valve is controlled to achieve the target EGR rate. However, a fresh air intake amount is estimated not by using the target EGR rate but rather by using a predicted value of the EGR rate that is obtained by subjecting the target EGR rate to a first-order lag process and a delay process. This is because, during a transition period in which the EGR rate changes abruptly, the actual EGR rate tracks the target EGR rate with a certain lag that is the result of a response delay that is attributable to the volume of the EGR passage or a collector portion. Note that, in the aforementioned Japanese Patent Literature there is no description regarding a specific method for performing the first-order lag process or the delay process that is used to calculate the predicted value of the EGR rate.

According to the technology disclosed in the abovementioned Japanese Patent Literature, the accuracy of estimating a fresh air intake amount is raised by predicting an actual EGR rate using a method that takes into account a response delay with respect to the EGR gas. However, according to the technology disclosed in the aforementioned Japanese Patent Literature, no countermeasure of any kind is implemented with respect to a lag in the actual EGR rate relative to the target EGR rate. Consequently, even though the target EGR rate is the optimum value of the EGR rate that is determined based on the engine speed and the fuel injection amount, during a transition period in which a response delay occurs, an EGR rate or EGR amount cannot be controlled to the target EGR rate. That is, in the technology disclosed in the aforementioned Japanese Patent Literature, a problem exists with regard to the accuracy of controlling the EGR rate or EGR amount.

**Citation List**

Patent Literature

Patent Literature 1: Japanese Patent Laid-Open No. 2005-54657

**Summary of Invention**

An object of the present invention is, in an internal combustion engine in which an exhaust passage and an intake passage are connected through an EGR valve, to enhance the accuracy of controlling an EGR rate or an EGR amount by actuation of the EGR valve. To achieve the aforementioned object, a control device of an internal combustion engine according to the present invention is configured to perform the operations described hereunder.

The control device according to the present invention calculates a first-order lag time constant that is an indicator of a response delay in a movement of EGR gas with respect to an action of an EGR valve, based on a pressure difference between upstream and downstream of the EGR valve. Further, the control device according to the present invention calculates a control target value relating to control of the EGR valve based on the calculated first-order lag time constant and a target value of an EGR rate or an EGR amount. With respect to a method for calculating the control target value, preferably the control target value is calculated by performing an inverse first-order lag conversion using the first-order lag time constant with respect to the target value of the EGR rate or the EGR amount. The control device according to the present invention actuates the EGR valve in accordance with the control target value obtained in this manner. As a result, even during a transition period in which a response delay arises, the actual value of the EGR rate or EGR amount can be caused to accurately track a target value.

The target value of the EGR rate or EGR amount is preferably calculated by the following type of method. First, a base target value of the EGR rate or the EGR amount that is premised on steady-state performance is calculated based on a load and an engine speed of the internal combustion engine and a value of a temperature/pressure condition that influences the EGR rate or the EGR amount. Further, a correction amount of the EGR rate or the EGR amount during a transition period is calculated based on a difference between the value of the temperature/pressure condition and a steady-state value of the temperature/pressure condition under the aforementioned load and engine speed. The target value of the EGR rate or the EGR amount is then calculated by correcting the base target value that is premised on steady-state performance with the correction amount during the transition period. According to this method, an optimal target value of the EGR rate or the EGR amount with respect to the current load and engine speed can be calculated even during a transition period.

**Brief Description of Drawings**

[Figure 1] Figure 1 is a block diagram illustrating the configuration of an engine system to which a control device according to an embodiment of the present invention is applied.
[Figure 2] Figure 2 is a graph illustrating results obtained by studying a trend of a first-order lag time constant with respect to a pressure difference between an exhaust pressure and a charged pressure prior to an action of an EGR valve.
[Figure 3] Figure 3 is a flowchart illustrating a routine for EGR control executed by a control device according to the embodiment of the present invention.
[Figure 4] Figure 4 is a graph illustrating an example of calculating control target values and a degree of EGR valve opening by means of the control device according to the embodiment of the present invention.

**Description of Embodiment**

An embodiment of the present invention will now be described with reference to the accompanying drawings.

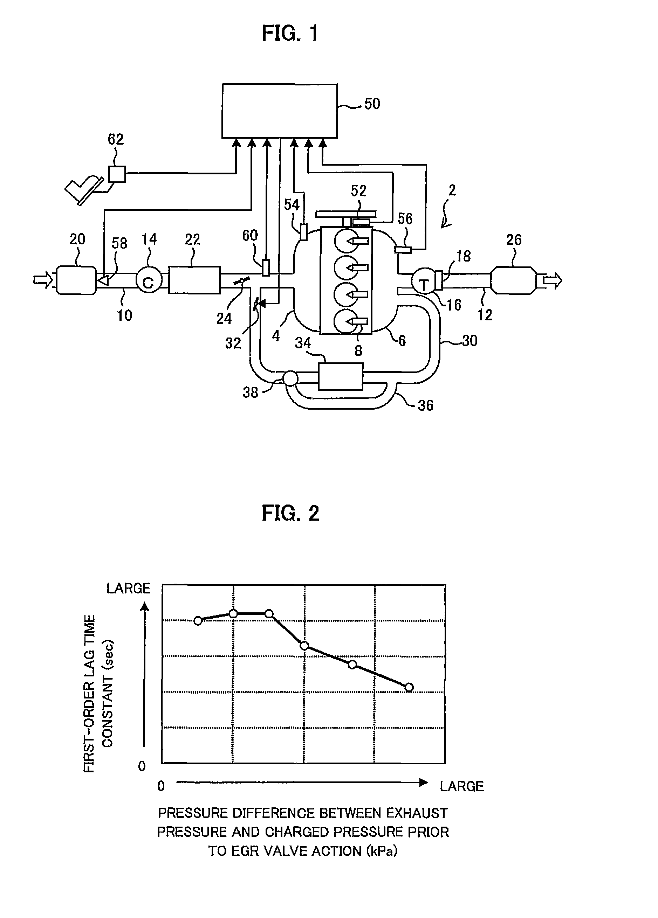

Figure 1 is a view illustrating the configuration of an engine system to which a control device according to an embodiment of the present invention is applied. An internal combustion engine according to the present embodiment is a diesel engine equipped with a turbocharger (hereunder, referred to simply as "engine"). Four cylinders are arranged in series in a main body 2 of the engine, and an injector 8 is provided in each cylinder. An intake manifold 4 and an exhaust manifold 6 are installed in the engine main body 2. An intake passage 10 through which fresh air that is drawn in from an air cleaner 20 flows is connected to the intake manifold 4. A compressor 14 of a turbocharger is installed in the intake passage 10. A diesel throttle 24 is provided downstream of the compressor 14 in the intake passage 10. An intercooler 22 is arranged between the compressor 14 and the diesel throttle 24 in the intake passage 10. An exhaust passage 12 for releasing exhaust gas emitted from the engine main body 2 into the atmosphere is connected to the exhaust manifold 6. A turbine 16 of the turbocharger is installed in the exhaust passage 12. The turbocharger is of a variable displacement-type, in which a variable nozzle 18 is provided in the turbine 16. A catalyst device 26 for purifying exhaust gas is provided downstream of the turbine 16 in the exhaust passage 12.
The engine according to the present embodiment is equipped with an EGR apparatus that recirculates exhaust gas from the exhaust system to the intake system. The EGR apparatus is connected by an EGR passage 30 to a position on the downstream side of the diesel throttle 24 in the intake passage 10 and to the exhaust manifold 6. An EGR valve 32 is provided in the EGR passage 30. An EGR cooler 34 is provided on the exhaust side of the EGR valve 32 in the EGR passage 30. A bypass passage 36 that bypasses the EGR cooler 34 is provided in the EGR passage 30. A bypass valve 38 that switches a direction in which exhaust gas flows is provided at a location at which the bypass passage 36 that branched from the EGR passage 30 merges again with the EGR passage 30.
The engine system according to the present embodiment includes an ECU (electronic control unit) 50. The ECU 50 is a control device that performs overall control of the entire engine system, and the control device according to the present invention is realized as one function of the ECU 50.
The ECU 50 captures signals of sensors that are included in the engine system and processes the signals. The sensors are installed at various locations in the engine system. In the intake passage 10, an air flow meter 58 is installed downstream of the air cleaner 20, a charged-pressure sensor 54 is installed downstream of the diesel throttle, and a temperature sensor 60 is installed in the intake manifold 4. Further, an exhaust pressure sensor 56 is installed in the exhaust manifold 6. In addition, an engine speed sensor 52 that detects revolutions of a crankshaft, and an accelerator degree-of-opening sensor 62 that outputs a signal in accordance with a degree of opening of an accelerator pedal and the like are also installed. The ECU 50 processes the signals of the various sensors that are captured, and actuates various actuators in accordance with a predetermined control program. The actuators actuated by the ECU 50 include the variable nozzle 18, the injectors 8, the EGR valve 32 and the diesel throttle 24. Note that the actuators and sensors connected to the ECU 50 also include a large number of actuators and sensors that are not illustrated in the drawing, and a description of such actuators and sensors is omitted from the present description.
The engine control that is executed by the ECU 50 includes EGR control. In the EGR control of the present embodiment, the EGR valve 32 is actuated by means of feedforward control and feedback control so that an actual value of an EGR rate that is calculated based on signals of various sensors becomes a control target value. However, although in the conventional EGR control a target value for the EGR rate that is determined based on engine speed and a fuel injection amount is set as it is as a control target value, in the EGR control of the present embodiment, a control target value is determined that is a target value when performing control that is based on an EGR rate target value. That is, according to the EGR control of the present embodiment, an EGR rate target value is determined as a target value of one quantity of state of the engine, and a control target value for EGR control by actuation of the EGR valve 32 is determined separately from the EGR rate target value. Hereunder, a method for determining the control target value for the EGR control of the present embodiment will be described.

There is a response delay in the movement of EGR gas with respect to an action of the EGR valve 32. Therefore, even if the degree of opening of the EGR valve 32 is changed by taking the target value of the EGR rate as it is as the control target value, a change in the EGR rate that is actually obtained will be a change that lags relative to the target value of the EGR rate. In order to cause the change in the actual EGR rate to match the target value of the EGR rate, it is necessary to determine a control target value that takes a response delay into account.

A response delay in the movement of EGR gas with respect to an action of the EGR valve 32, that is, a response delay in a change in the EGR rate relative to a change in the degree of opening of the EGR valve 32 can be expressed by the term "first-order lag". This means that a waveform of the EGR rate that is obtained by actuating the EGR valve 32 in accordance with a control target value corresponds to a waveform that is obtained by subjecting the control target value to a first-order lag process. Hence, if the control target value is determined so that a waveform obtained by subjecting the control target value to a first-order lag process becomes a waveform of the target value of the EGR rate, it is possible to cause the change in the actual EGR rate to match the target value of the EGR rate by actuating the EGR valve 32 in accordance with the control target value.

An important point in determining the control target value in the manner described above is how to determine a "first-order lag time constant" that determines a waveform after the first-order lag process. With regard to this point, the inventor of the present application confirmed that the extent of a response delay in a change in the EGR rate relative to a change in the degree of opening of the EGR valve 32 is related to a pressure difference between upstream and downstream of the EGR valve 32. An indicator of the response delay is the first-order lag time constant, and it was confirmed by experiment that a clear relation exists between the first-order lag time constant and a pressure difference between upstream and downstream of the EGR valve 32.

Figure 2 is a graph illustrating results obtained by studying a trend of the first-order lag time constant with respect to a pressure difference between an exhaust pressure and a charged pressure prior to an action of the EGR valve 32. Based on this graph, it is found that as the pressure difference increases, the first-order lag time constant decreases, that is, the rate of change in the EGR rate increases. By ascertaining in advance the characteristics shown in this graph as known information, more specifically, by mapping the characteristics and storing the resulting map in the ECU 50, the first-order lag time constant can be uniquely identified if the pressure difference between upstream and downstream of the EGR valve 32 is known. If the first-order lag time constant can be identified, by performing an inverse first-order lag conversion using the first-order lag time constant, based on the target value of the EGR rate, it is possible to calculate a control target value for causing the change in the actual EGR rate to achieve the aforementioned target value.

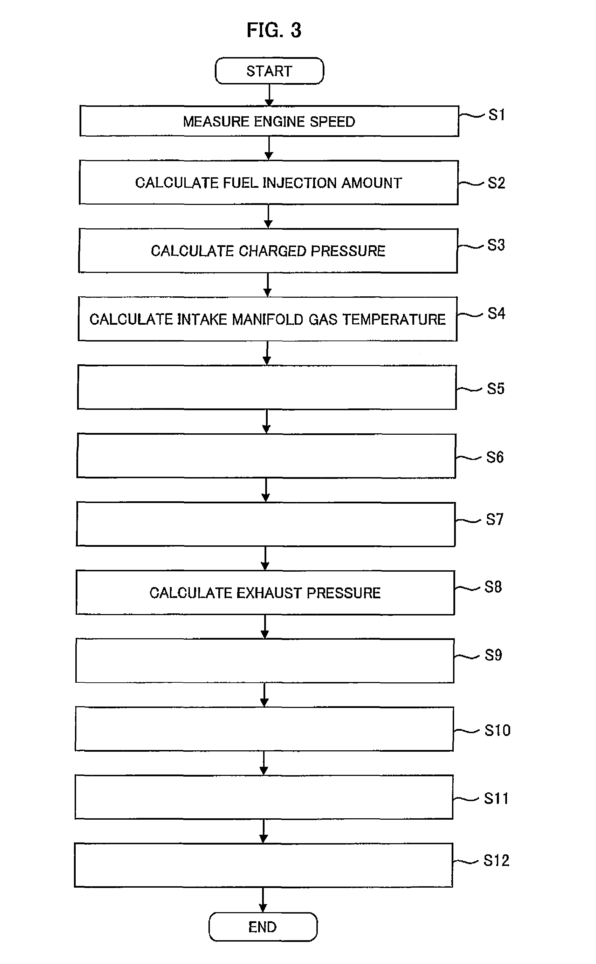

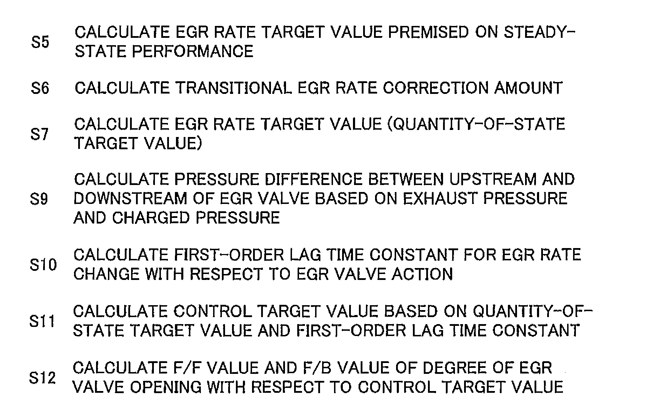

A specific method for determining the control target value can be described using the flowchart in Figure 3. The flowchart in Figure 3 illustrates a routine for EGR control that is executed by the ECU 50 in the present embodiment.

In step S1 of the routine illustrated in Figure 3, the engine speed is measured based on a signal from the engine speed sensor 52. In step S2, a fuel injection amount is calculated in accordance with a degree of accelerator opening that is obtained based on a signal from the accelerator degree-of-opening sensor 62. In step S3, a charged pressure that is a pressure downstream of the EGR valve 32 is calculated based on a signal of the charged-pressure sensor 54. In step S4, the temperature of gas inside the intake manifold 4 is calculated based on a signal of the temperature sensor 60. The processing in the steps described above is processing for obtaining data that is required to calculate an EGR rate target value as a quantity-of-state target value of the engine. Therefore, the order of the respective steps can be changed as appropriate.

Calculation of an EGR rate target value is performed in steps S5 to S7. In step S5, an EGR rate target value that is premised on steady-state performance is calculated in accordance with the engine speed, the fuel injection amount, the charged pressure and the intake manifold gas temperature that were acquired in steps S1 to S4. The term "EGR rate target value that is premised on steady-state performance" means a value of the EGR rate at which the desired performance can be obtained when the engine is in a steady state. An EGR rate target value that is premised on steady-state performance can be expressed by a function of an in-cylinder inflow air amount and a smoke-limit air amount during a steady state. In the following Equation 1, EGRst represents an EGR rate target value that is premised on steady-state performance, Gcylinder represents an in-cylinder inflow air amount, and Glimit represents a smoke-limit air amount during a steady state.

$$EGRst = (Gcylinder-Glimit)/Gcylinder \ ... \ Equation \ 1$$

The in-cylinder inflow air amount Gcylinder in Equation 1 can be expressed by a function of the charged pressure and the intake manifold gas temperature. In the following Equation 2, Tin represents the intake manifold gas temperature and Pcharge represents the charged pressure. Further, A, a, and b are each constants.

$$Gcylinder = (A/Tin)*(a*Pcharge+b) \dots Equation\ 2$$

The smoke-limit air amount Glimit in Equation 1 means the lower limit of an air amount at which the occurrence of smoke can be suppressed to a permissible level. The smoke-limit air amount Glimit is a constant that is determined based on the engine speed and the fuel injection amount. The fuel injection amount indicates the size of the load of the engine. A map in which the smoke-limit air amount is stored in association with the engine speed and the fuel injection amount is prepared in the ECU 50.

In step S6, a correction amount of the EGR rate during a transition period is calculated in accordance with the engine speed, the fuel injection amount, the charged pressure and the intake manifold gas temperature acquired in steps S1 to S4. The following two kinds of correction amounts are prepared as EGR rate correction amounts.

A first EGR rate correction amount is an EGR rate correction amount that corresponds to a transition in the charged pressure, and is used as a correction coefficient for the EGR rate target value that is premised on steady-state performance. The magnitude of the charged pressure influences the rate of atomization of sprayed fuel, with the aforementioned smoke-limit air amount decreasing as the rate of atomization of the fuel increases. The first EGR rate correction amount is provided to compensate for the influence of the charged pressure on the smoke-limit air amount, and is set as a constant in accordance with a difference between the current charged pressure and the charged pressure during a steady state. Note that the term "charged pressure during a steady state" refers to a charged pressure that would be obtained under the current engine speed and fuel injection amount if the engine were currently in a steady state. A map in which the charged pressure during a steady state is stored in association with the engine speed and the fuel injection amount, and a map in which the first EGR rate correction amount is stored in association with a difference between the current charged pressure and the charged pressure during a steady state are prepared in the ECU 50.

A second EGR rate correction amount is an EGR rate correction amount that corresponds to a transition in the intake manifold gas temperature, and is used as a correction coefficient for the EGR rate target value that is premised on steady-state performance. Similarly to the charged pressure, the rate of atomization of sprayed fuel is influenced by fluctuations in the intake manifold gas temperature. The second EGR rate correction amount is provided to compensate for the influence of the intake manifold gas temperature on the smoke-limit air amount, and is set as a constant that is in accordance with a difference between the current intake manifold gas temperature and the intake manifold gas temperature during a steady state. Note that the term "intake manifold gas temperature during a steady state" refers to an intake manifold gas temperature that would be obtained under the current engine speed and fuel injection amount if the engine were currently in a steady state. A map in which the intake manifold gas temperature during a steady state is stored in association with the engine speed and the injection amount, and a map in which the second EGR rate correction amount is stored in association with a difference between the current intake manifold gas temperature and the intake manifold gas temperature during a steady state are prepared in the ECU 50.

In step S7, as shown in the following Equation 3, an EGR rate target value as a quantity-of-state target value of the engine is calculated by multiplying the EGR rate target value that is premised on steady-state performance by the first EGR rate correction amount and the second EGR rate correction amount. According to this method for calculating an EGR rate target value, an optimal EGR rate target value with respect to the current engine load and engine speed can be calculated during a transition period also. Note that, in the following Equation 3, EGRT represents the EGR rate target value as a quantity-of-state target value, EGRcorrect1 represents the first EGR rate correction amount, and EGRcorrect2 represents the second EGR rate correction amount.

$$EGRT = EGRst*EGRcorrect1*EGRcorrect2 \dots Equation\ 3$$

In the above described processing of steps S5 to S7, the order of step 5 and step 6 can also be changed as appropriate.

Next, in steps S8 to S11, calculation of the control target value is performed. First, in step S8, an exhaust pressure that is the pressure upstream of the EGR valve 32 is calculated based on the signal of the exhaust pressure sensor 56. In step S9, a pressure difference between upstream and downstream of the EGR valve 32 is calculated using the charged pressure obtained in step S3 and the exhaust pressure obtained in step S8. Next, in step S10, a first-order lag time constant corresponding to the pressure difference between upstream and downstream of the EGR valve 32 is calculated. Characteristics of the first-order lag time constant with respect to a pressure difference between upstream and downstream of the EGR valve 32 are mapped and stored in the ECU 50. Note that the processing in steps 8 to S10 can also be performed in advance of the processing in steps S5 to S7 for calculating the EGR rate target value.

In step S11, a control target value is calculated by means of the following Equation 4 using the EGR rate target value calculated in step S7 and the first-order lag time constant calculated in step S10. Equation 4 is an equation that shows processing for an inverse first-order conversion. In Equation 4, ControlT(i) represents the present control target value, EGRT(i) represents the present EGR rate target value, EGRT(i-1) represents the previous EGR rate target value, TL represents the first-order lag time constant, and Ts represents the operation period.

$$ControlT(i) = (EGRT(i)-EGRT(i-1))*(TL/Ts)+EGRT(i-1) \ldots \text{Equation 4}$$

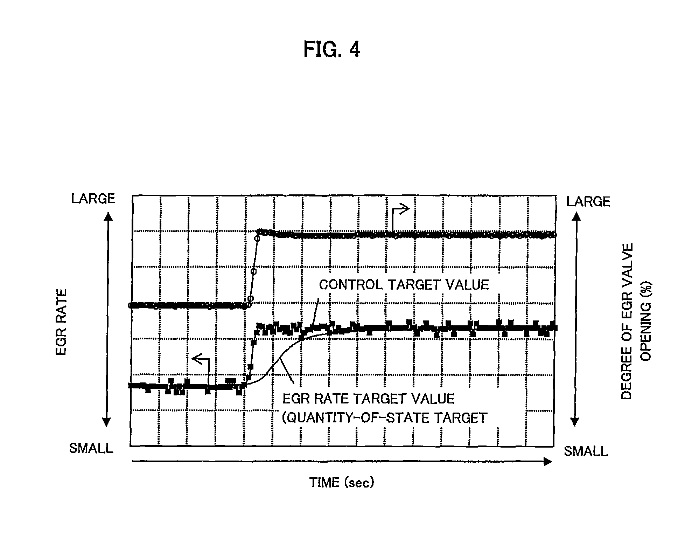

The graph in Figure 4 illustrates an example in which control target values are calculated using the above Equation 4. Control target values that are indicated by black square marks in Figure 4 were calculated for each operation period in a case where EGR rate target values (quantity-of-state target values) indicated by a curve in Figure 4 were given. As will be understood from the graph, by performing the calculation in step S11, a control target value that is related to an inverse first-order lag can be obtained with respect to an EGR rate target value (quantity-of-state target value).

In step S12, a feedforward value (F/F value) and a feedback value (F/F value) of the degree of opening of the EGR valve 32 are calculated based on the control target value calculated in step S11. When implementing the present invention, there is no limitation regarding a specific method of feedforward control in the EGR control and there is also no limitation regarding a specific method of feedback control. In the graph in Figure 4, the result of calculating the degree of EGR valve opening based on the control target values is also shown. By actuating the EGR valve 32 in accordance with the degree of EGR valve opening calculated in step S12, the EGR rate target value (quantity-of-state target value) calculated in step S7 is realized with respect to a change in the actual EGR rate.

By performing EGR control according to the above described routine, the actual value of the EGR rate can be caused to accurately track the target value not just during a steady state, but also during a transition period in which a response delay arises.

Note that the present invention is not limited to the above described embodiment, and various modifications can be made without departing from the spirit and scope of the present invention. For example, the modifications described hereunder may be made.

Although in the above described embodiment a target value of the EGR rate is calculated as a quantity-of-state target value, and a control target value is calculated based on the target value of the EGR amount, a configuration may also be adopted in which a target value of an EGR amount is calculated as a quantity-of-state target value, and a control target value is calculated based on the target value of the EGR amount.

Although in the above described embodiment the pressure downstream of the EGR valve is calculated based on an output value of the charged-pressure sensor, a configuration may also be adopted in which the pressure downstream of the EGR valve is estimated based on information relating to the operating state of the engine or another sensor value. The same applies with respect to the pressure upstream of the EGR valve. The pressure upstream of the EGR valve may also be estimated based on information relating to the operating state of the engine or another sensor value, and not based on an output value of the exhaust pressure sensor.

Although in the above described embodiment the control device according to the present invention is applied to a turbocharged engine, the control device according to the present invention can also be applied to a naturally aspirated engine. Further, the control device according to the present invention can also be applied to a spark-ignition engine such as a gasoline engine, and not just to a diesel engine.

**Reference Signs List**

| | |
|---|---|
| 2 | Engine main body |
| 4 | Intake manifold |
| 6 | Exhaust manifold |
| 30 | EGR passage |
| 32 | EGR valve |
| 50 | ECU |
| 52 | Engine speed sensor |
| 54 | Charged-pressure sensor |
| 56 | Exhaust pressure sensor |

60    Temperature sensor
62    Accelerator degree-of-opening sensor

**Claims**

1.  A control device of an internal combustion engine that connects an exhaust passage and an intake passage through an EGR valve, comprising:

    first-order lag time constant calculation means for calculating a first-order lag time constant that is an indicator of a response delay in a movement of EGR gas with respect to an action of the EGR valve, based on a pressure difference between upstream and downstream of the EGR valve;
    control target value calculation means for calculating a control target value based on the first-order lag time constant and a target value of an EGR rate or an EGR amount; and
    EGR valve actuation means for actuating the EGR valve in accordance with the control target value.

2.  The control device of an internal combustion engine according to claim 1, wherein the control target value calculation means comprises:

    means for calculating a base target value of the EGR rate or the EGR amount that is premised on steady-state performance, based on a load and a number of revolutions of the internal combustion engine and a value of a temperature/pressure condition that influences the EGR rate or the EGR amount;
    means for calculating a correction amount of the EGR rate or the EGR amount during a transition period based on a difference between a steady-state value of the temperature/pressure condition under the load and the number of revolutions of the internal combustion engine that form a basis for the base target value, and the value of the temperature/pressure condition that forms a basis for the base target value; and
    means for calculating the target value of the EGR rate or the EGR amount by correcting the base target value using the correction amount.

3.  The control device of an internal combustion engine according to claim 1 or 2, wherein the control target value calculation means calculates the control target value by performing an inverse first-order lag conversion using the first-order lag time constant with respect to the target value of the EGR rate or the EGR amount.

4.  The control device of an internal combustion engine according to any one of claims 1 to 3, wherein
    the internal combustion engine is an internal combustion engine equipped with a turbocharger and comprises an exhaust pressure sensor; and a charged-pressure sensor, and
    the first-order lag time constant calculation means obtains the pressure difference based on a difference between an exhaust pressure that is measured by the exhaust pressure sensor and a charged pressure that is measured by the charged-pressure sensor.

# FIG. 1

# FIG. 2

PRESSURE DIFFERENCE BETWEEN EXHAUST
PRESSURE AND CHARGED PRESSURE PRIOR
TO EGR VALVE ACTION (kPa)

8

## FIG. 3

```
                    ┌─────────────┐
                    │    START    │
                    └─────────────┘
                           │
                           ▼
    ┌──────────────────────────────────────────┐
    │           MEASURE ENGINE SPEED            │──── S1
    └──────────────────────────────────────────┘
                           │
                           ▼
    ┌──────────────────────────────────────────┐
    │        CALCULATE FUEL INJECTION AMOUNT    │──── S2
    └──────────────────────────────────────────┘
                           │
                           ▼
    ┌──────────────────────────────────────────┐
    │          CALCULATE CHARGED PRESSURE       │──── S3
    └──────────────────────────────────────────┘
                           │
                           ▼
    ┌──────────────────────────────────────────┐
    │  CALCULATE INTAKE MANIFOLD GAS TEMPERATURE│──── S4
    └──────────────────────────────────────────┘
                           │
                           ▼
    ┌──────────────────────────────────────────┐
    │                                           │──── S5
    └──────────────────────────────────────────┘
                           │
                           ▼
    ┌──────────────────────────────────────────┐
    │                                           │──── S6
    └──────────────────────────────────────────┘
                           │
                           ▼
    ┌──────────────────────────────────────────┐
    │                                           │──── S7
    └──────────────────────────────────────────┘
                           │
                           ▼
    ┌──────────────────────────────────────────┐
    │          CALCULATE EXHAUST PRESSURE       │──── S8
    └──────────────────────────────────────────┘
                           │
                           ▼
    ┌──────────────────────────────────────────┐
    │                                           │──── S9
    └──────────────────────────────────────────┘
                           │
                           ▼
    ┌──────────────────────────────────────────┐
    │                                           │──── S10
    └──────────────────────────────────────────┘
                           │
                           ▼
    ┌──────────────────────────────────────────┐
    │                                           │──── S11
    └──────────────────────────────────────────┘
                           │
                           ▼
    ┌──────────────────────────────────────────┐
    │                                           │──── S12
    └──────────────────────────────────────────┘
                           │
                           ▼
                    ┌─────────────┐
                    │     END     │
                    └─────────────┘
```

S5  CALCULATE EGR RATE TARGET VALUE PREMISED ON STEADY-STATE PERFORMANCE

S6  CALCULATE TRANSITIONAL EGR RATE CORRECTION AMOUNT

S7  CALCULATE EGR RATE TARGET VALUE (QUANTITY-OF-STATE TARGET VALUE)

S9  CALCULATE PRESSURE DIFFERENCE BETWEEN UPSTREAM AND DOWNSTREAM OF EGR VALVE BASED ON EXHAUST PRESSURE AND CHARGED PRESSURE

S10  CALCULATE FIRST-ORDER LAG TIME CONSTANT FOR EGR RATE CHANGE WITH RESPECT TO EGR VALVE ACTION

S11  CALCULATE CONTROL TARGET VALUE BASED ON QUANTITY-OF-STATE TARGET VALUE AND FIRST-ORDER LAG TIME CONSTANT

S12  CALCULATE F/F VALUE AND F/B VALUE OF DEGREE OF EGR VALVE OPENING WITH RESPECT TO CONTROL TARGET VALUE

## FIG. 4

## INTERNATIONAL SEARCH REPORT

| International application No. |
| --- |
| PCT/JP2012/080491 |

**A. CLASSIFICATION OF SUBJECT MATTER**
*F02M25/07*(2006.01)i, *F02D21/08*(2006.01)i

According to International Patent Classification (IPC) or to both national classification and IPC

**B. FIELDS SEARCHED**

Minimum documentation searched (classification system followed by classification symbols)
F02M25/07, F02D21/08

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 8-74675 A (Nissan Motor Co., Ltd.),<br>19 March 1996 (19.03.1996),<br>paragraphs [0017] to [0034]; fig. 1 to 6<br>(Family: none) | 1,3,4<br>2 |
| Y | JP 9-287510 A (Unisia Jecs Corp.),<br>04 November 1997 (04.11.1997),<br>paragraphs [0030], [0031], [0034]<br>(Family: none) | 1,3,4 |
| Y | JP 2002-4904 A (Mitsubishi Motors Corp.),<br>09 January 2002 (09.01.2002),<br>paragraph [0026]; fig. 1<br>(Family: none) | 4 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 February, 2013 (05.02.13) | Date of mailing of the international search report<br>26 February, 2013 (26.02.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/080491

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2010-261420 A  (Toyota Motor Corp.),<br>18 November 2010 (18.11.2010),<br>paragraph [0031]; fig. 1<br>(Family: none) | 4 |
| A | WO 2010/035554 A1  (Yanmar Co., Ltd.),<br>01 April 2010 (01.04.2010),<br>entire text; all drawings<br>& JP 2010-84519 A | 1-4 |
| A | JP 2004-150343 A  (Komatsu Ltd.),<br>27 May 2004 (27.05.2004),<br>entire text; all drawings<br>& US 2004/0084031 A1 | 1-4 |

Form PCT/ISA/210 (continuation of second sheet) (July 2009)

## REFERENCES CITED IN THE DESCRIPTION

**Patent documents cited in the description**

- JP 2005054657 A